## Europäisches Patentamt

## European Patent Office

## Office européen des brevets

(19)

(11) Numéro de publication: **0 052 248**
**B1**

(12)

# FASCICULE DE BREVET EUROPEEN

(45) Date de publication du fascicule du brevet:
**02.01.85**

(51) Int. Cl.³: **F 16 L 27/08,** C 21 B 7/12

(21) Numéro de dépôt: **81108577.8**

(22) Date de dépôt: **20.10.81**

(54) **Système d'éléments modulaires pour la réalisation de connexions pivotantes, bras articulé constitué par de tels éléments et application à une perceuse de trous de coulée d'un four à cuve.**

(30) Priorité: **17.11.80 LU 82942**

(43) Date de publication de la demande:
**26.05.82 Bulletin 82/21**

(45) Mention de la délivrance du brevet:
**02.01.85 Bulletin 85/1**

(84) Etats contractants désignés:
**AT BE DE FR GB IT NL SE**

(56) Documents cités:
**DD - A - 33 703**
**DE - A - 2 001 229**
**DE - A - 2 157 712**
**FR - A - 2 341 651**
**US - A - 2 343 491**

(73) Titulaire: **PAUL WURTH S.A., 32 rue d'Alsace,
L-1122 Luxembourg (LU)**

(72) Inventeur: **Mailliet, Pierre, 1 allée Drosbach, Howald (LU)**
Inventeur: **Kraemer, Edgar, 41 rue E. Oster, Howald (LU)**

(74) Mandataire: **Meyers, Ernest et al, Office de Brevets
Freylinger & Associés 46 rue du Cimetière B.P. 1153,
L-1011 Luxembourg (LU)**

BUNDESDRUCKEREI BERLIN

## Description

La présente invention concerne un système d'éléments modulaires pour la réalisation de connexions pivotantes étanches traversées par plusieurs passages séparés d'un fluide sous pression. L'invention concerne également un bras articulé composé d'un groupe de conduites séparées, dans chacune desquelles circule un fluide sous pression, reliant un pivot fixe à un pivot baladeur et pourvu d'au moins un coude entre ces deux pivots et, à titre d'application particulière, un dispositif d'alimentation d'une perceuse des trous de coulée d'un four à cuve en fluide hydraulique et/ou pneumatique, ladite perceuse étant conçue pour coulisser le long d'un affût, tandis que le fluide hydraulique ou pneumatique est disponible en un point prédéterminé et fixe par rapport à l'affût, ce dispositif comprenant un raccordement à tuyau rigide entre ce point et la perceuse.

L'invention sera présentée en référence à cette dernière application. Il faut toutefois noter qu'il ne s'agit pas de la seule application possible et que l'invention pourra être appliquée partout où se présentent des problèmes analogues à ceux discutés par la suite.

Les perceuses utilisées généralement pour ouvrir les trous de coulée d'un four à cuve, notamment d'un haut fourneau, sont des foreuses à percussion actionnées presque exclusivement par voie pneumatique et très rarement par voie hydraulique à cause, comme on le verra plus loin, des difficultés d'alimentation en fluide hydraulique.

Une foreuse à percussion nécessite au minimum deux circuits d'alimentation, l'un pour la rotation de l'instrument de forage et l'autre pour actionner l'instrument de percussion. Si la foreuse peut accomplir des fonctions supplémentaires, par exemple, rotation dans les deux sens et éventuellement aussi percussion dans les deux sens, il faut d'autant plus de circuits supplémentaires. En outre, ces foreuses sont généralement équipées d'une soufflerie pour dégager les copeaux de forage lors de l'ouverture du trou de coulée et refroidir en même temps, la mèche et sa couronne. Cette soufflerie nécessite également une conduite d'air comprimé. Il faut donc un système de raccordement multiple entre un point fixe prédéterminé sur l'affût où le fluide pneumatique ou hydraulique est disponible et la perceuse qui est déplacée le long de l'affût sur une distance de plusieurs mètres.

La solution la plus simple et la plus répandue consiste à prévoir des tuyaux flexibles, par exemple, en caoutchouc. L'un des inconvénients de cette solution est, s'il n'y a pas un système complexe et onéreux, de tension et d'enroulement, que l'encombrement constitué par ces nombreux flexibles qui pendent autour de la foreuse constitue un risque d'accidents pour le personnel opérant autour de ces machines. Un deuxième inconvénient est que ces conduites flexibles pendent au-dessus de la rigole de coulée lors de l'opération de forage et sont, de fait, exposées aux éclaboussements, c'est-à-dire aux risques de subir des fuites, d'être brûlées et d'enflammer les installations.

Pour y remédier, le FR-A-2 341 651 propose une perceuse de trous de coulée dans laquelle l'alimentation de l'organe de forage est effectuée par des conduites rigides qui sont articulées entre elles au moyen de raccords tournants. Toutefois, pour qu'un tel système d'alimentation puisse fonctionner correctement, il faut que les axes de rotation des raccords tournants soient et restent toujours strictement parallèles, faute de quoi le système n'est pas déplaçable et/ou sera sujet à une détérioration rapide et à des fuites au niveau des raccords. Or, cette condition de parallélisme des axes de pivotement n'est pratiquement jamais remplie, soit à cause d'imprécisions de fabrication, soit à cause de déformations ultérieures.

Dans le cas de perceuses pneumatiques, c'est-à-dire à air comprimé, on peut résoudre ces problèmes assez facilement tout en sauvegardant la conception préconisée par le brevet français. En effet, dans le cas de perceuses pneumatiques, il suffit d'une seule conduite principale pour amener l'air comprimé jusqu'à la perceuse et de diviser cet air comprimé, au niveau de la perceuse, au moyen de plusieurs vannes, en un nombre de courants correspondant au nombre de fonctions à exercer. Par contre, ces vannes étant également actionnées par air comprimé, il faut des conduites auxiliaires pour en assurer la commande. Toutefois, ces conduites ne posent pas les mêmes problèmes étant donné qu'elles sont à faible section et plus ou moins flexibles. En outre, la pression n'étant pas élevée, il est possible de leur adjoindre des compensateurs de sorte que les problèmes énoncés peuvent être résolus assez facilement. Mais le facteur le plus important est peut-être celui que les circuits pneumatiques n'ont pas besoin de conduites de retour, l'air comprimé pouvant s'échapper librement après avoir servi.

Il ne reste donc qu'une seule conduite principale et pour celle-ci, on a pu résoudre le problème du parallélisme des axes d'articulation, grâce au fait que les pressions pneumatiques n'excèdent jamais cinq à huit bars, en prévoyant un raccord tournant et oscillant, ainsi que deux cardans capotés par des compensateurs. En outre, même s'il existait une petite fuite, ceci ne serait pas grave.

Malheureusement, les problèmes deviennent plus difficiles à résoudre la perceuse fonctionne par voie hydraulique, car les solutions utilisées dans le cas de perceuses pneumatiques ne sont plus utilisables pour les perceuses hydrauliques. La raison en est que les pressions du liquide hydraulique se situent en général entre cent et deux cents bars alors que les solutions adoptées pour les perceuses pneumatiques n'ont été possibles que grâce au fait que les pressions pneumatiques n'excèdent pas cinq à huit bars. Une autre raison est, bien entendu, le fait que les circuits hydrauliques nécessitent une conduite »aller« et une conduite »retour«.

Par contre, le système hydraulique présente plusieurs avantages non négligeables par rapport au système pneumatique. L'un de ceux-ci est que les systèmes hydrauliques sont beaucoup moins bruyants que les systèmes pneumatiques. Une autre raison est que les besoins en air comprimé pour les systèmes pneumatiques sont relativement importants de sorte que les installations doivent être équipées en conséquence, tandis que les besoins d'un système hydraulique sont beaucoup plus modestes. Les consommations énergétiques des moteurs hydrauliques sont, en effet, environ 50% inférieures à celles des moteurs pneumatiques et leur puissance est supérieure. En plus, il ne faut pas oublier l'existence d'une centrale hydraulique pour actionner les boucheuses de sorte qu'on pourrait raccorder la foreuse à cette centrale. Pour ces différentes raisons, les perceuses hydrauliques sont préférables aux perceuses pneumatiques. Malheureusement, il n'existait pas de système de transmission du liquide hydraulique analogue à celui proposé par le FR-A-2 341 651 pour les perceuses pneumatiques.

L'objectif de la présente invention est de combler cette lacune en proposant un système d'éléments modulaires pour la réalisation de raccords articulés entre tuyaux rigides et son application à l'alimentation d'une perceuse en fluide hydraulique. On connait déjà un système à deux modules pour réaliser des connexions pivotantes correspondant au préambule de la revendication 1 (voir DE-A-2 157 712).

L'invention telle qu'elle est caractérisée dans la revendication 1, resout le problème consistant à créer des raccords articulés entre les tuyaux rigides d'un circuit de fluide hydraulique, qui présentent une grande flexibilité dans les déplacements desdits tuyaux rigides, et autorisent sans difficultés les déplacements à plusieurs dégrées de liberté.

Des modes particuliers de réalisation de l'invention apparaissent dans les revendications dépendantes.

Des particularités et caractéristiques ressortiront de la description détaillée d'un mode de réalisation présenté ci-dessous, à titre d'illustration, en référence aux dessins dans lesquels:

Les figures 1, 2 et 3 représentent respectivement des vues, en perspectives, de chacun des modules proposés par l'invention;

la figure 4 représente schématiquement une vue en coupe longitudinale d'une structure articulée formée sur base du module de la figure 1;

la figure 5 représente schématiquement une vue latérale de la structure de la figure 4 sans couvercle;

la figure 6 montre schématiquement la face intérieure d'un bloc de connexion à associer avec le module de la figure 1;

la figure 7 montre schématiquement une vue, partiellement en coupe longitudinale, d'une structure articulée formée sur base du module de la figure 2;

la figure 8 montre schématiquement, une vue latérale de la structure de la figure 7;

la figure 9 montre schématiquement une vue frontale de la structure selon la figure 7;

la figure 10 montre schématiquement une vue, partiellement en coupe, d'une structure complexe à trois axes de pivotement et

les figure 11 et 12 montrent respectivement des vues en élévation et en plan d'une application à un système de transmission de fluides hydraulique et pneumatique à une perceuse d'un four à cuve.

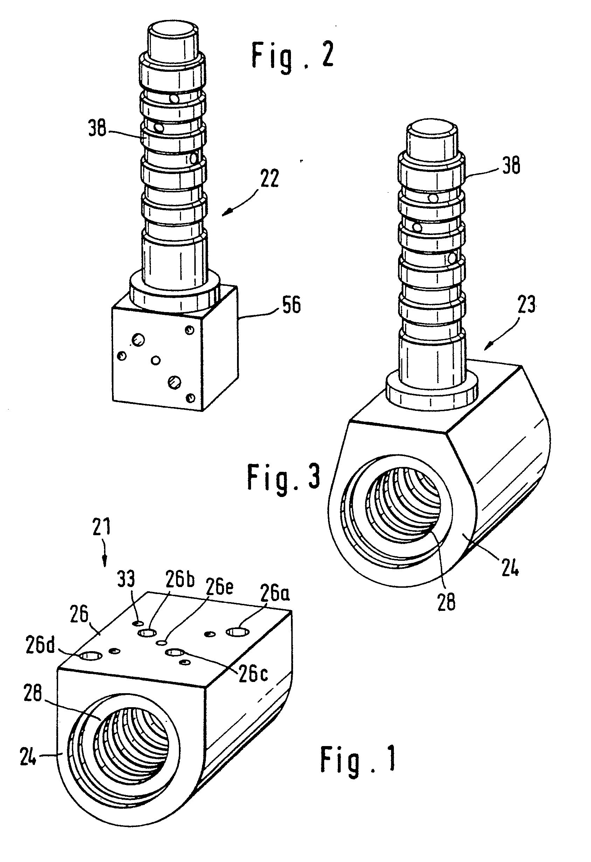

La figure 1 montre un premier module 21 constitué essentiellement d'un bloc cylindrique 24 pourvu d'une face aplatie 26 et d'un alésage axial cylindrique 28.

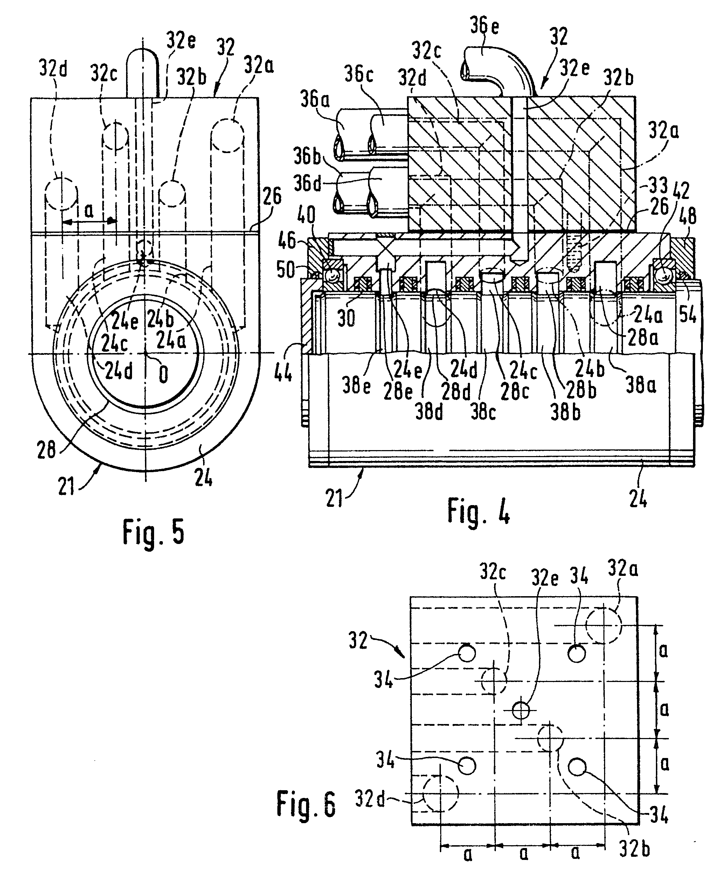

Les détails de ce module 21 seront expliqués en référence aux figures 4 et 5. Comme on peut le constater sur ces figures, l'alésage cylindrique 28 du bloc 24 comporte une série de gorges circulaires intérieures 28a, 28b, 28c, 28d et 28e. Comme le montre la figure 4, ces gorges peuvent avoir des profondeurs différentes en fonction du débit du fluide auquel elles doivent assurer le passage. Dans l'exemple illustré, dans lequel il s'agira d'alimenter une foreuse à percussion pour ouvrir le trou de coulée d'un four à cuve, il y aura deux gorges plus profondes 28a, 28d qui font partie du circuit hydraulique alimentant l'instrument de percussion, tandis que les deux gorges moins profondes 28b, 28c font partie du circuit hydraulique actionnant l'instrument de forage. La cinquième gorge 28e, de section plus faible, sert au passage de l'air comprimé utilisé par la soufflerie.

Chacune des gorges 28a à 28e est encadrée par deux bourrages 30. Le nombre de ces bourrages 30 est donc d'une unité supérieure à celui du nombre de gorges circulaires. Ces bourrages 30 sont avantageusement des bourrages commercialisés sous le nom commercial ROTOMATIC, du type M17 ou M19. Ces bourrages assurent l'étanchéité entre les différentes gorges circulaires et supportent facilement, selon le type utilisé, les pressions de 200 à 400 bars généralement nécessaires dans ces circuits hydrauliques.

La face 26 comporte des ouvertures 26a, 26b, 26c, 26d et 26e communiquant respectivement avec les gorges circulaires intérieures 28a, 28b, 28c, 28d et 28e à travers des canaux 24a, 24b, 24c, 24d et 24e aménagés à travers le bloc 24 perpendiculairement à la face 26. Les diamètres de ces canaux intérieurs, ainsi que les ouvertures dans la paroi 26 sont également fonction du débit du circuit associé.

La face 26 comporte également une série de taraudages 33 pour permettre la fixation d'un bloc de connexion du genre illustré par la référence 32. Ce bloc 32 comporte des canaux intérieurs 32a, 32b, 32c, 32d et 32e pour assurer la communication entre les canaux et les gorges circulaires du bloc 24 et des conduites rigides extérieures 36a, 36b, 36c, 36d et 36e, ainsi que des trous 34 correspondant aux taraudages 33 pour faire passer des vis de fixation.

Comme on peut le voir sur la figure 6, la répartition des canaux traversant l'interface entre les blocs 32 et 24 est symétrique par rapport au centre et l'espacement suivant deux directions perpendiculaires, entre deux canaux voisins est toujours égal à une distance constante »a« représentant l'écartement des gorges circulaires dans le bloc 24. Cette disposition symétrique permet d'orienter le bloc 32 par rapport au bloc 24 de la manière illustrée sur la figure 4 ou bien dans le sens opposé. Il est même possible, en doublant les canaux 24a, 24b, 24c, 24d et 24e, c'est-à-dire en prévoyant pour chacune des gorges circulaires un deuxième canal disposé symétriquement par rapport au canal montré et par rapport à un plan axial, d'orienter le bloc 32 de manière à ce qu'il soit tourné de 90° par rapport à l'orientation montrée sur la figure 4.

Pour compléter le raccord, le bloc 24 est conçu pour recevoir, par pénétration, un tourillon 38 pouvant faire partie de l'un des modules montrés sur la figure 2 ou sur la figure 3. Ce tourillon 38 pénètre dans l'alésage 28 pour former avec les bourrages 30 une structure étanche pouvant pivoter autour de l'axe longitudinal »0« (figure 5) du bloc 24. Le tourillon 38 est, comme il sera décrit plus en détail en référence aux figures suivantes, traversé par des canaux intérieurs débouchant à la surface (voir figure 2) du tourillon 38 pour communiquer avec chacune des gorges 28a, 28b, 28c, 28d et 28e.

Le tourillon 38 comportera, de préférence, une série de rainures périphériques 38a, 38b, 38c, 38d et 38e correspondant respectivement aux gorges circulaires 28a, 28b, 28c, 28d et 28e du bloc 24. C'est dans ces rainures périphériques que débouchent respectivement chacun des canaux intérieurs du tourillon 38 (figure 2).

La possibilité de rotation du bloc 24 par rapport au tourillon 38, ou vice versa, est assurée par deux roulements 40, 42, prévus aux extrémités opposées, avant le premier bourrage et derrière le dernier bourrage. Ces roulements 40, 42 sont interchangeables et peuvent être montés dans d'autres structures articulées telles que décrites plus loin. La fermeture frontale, du côté opposé à celui par lequel pénètre le tourillon 38 est assurée par un couvercle 44 fixé, par exemple, au moyen de vis non montrées, sur l'extrémité du tourillon. Enfin la structure articulée est complétée par deux bagues de fermeture 46, 48 interchangeables et également adaptables à d'autres structures. Entre la bague 46 et le couvercle 44 se trouve un joint d'étanchéité 50. De même, un joint d'étanchéité analogue 54 se trouve entre la bague 48 et le corps du tourillon 38 émergeant du bloc 24.

On va maintenant décrire plus en détail le second module 22 illustré par la figure 2. Ce second module se compose essentiellement d'un tourillon 38 solidaire d'une tête de distribution 56.

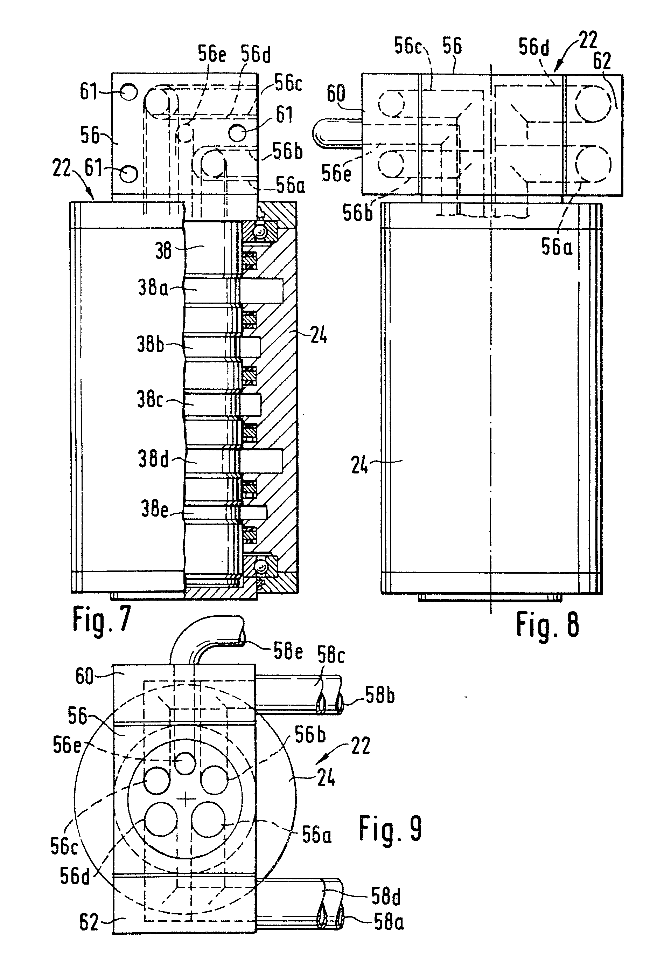

Les détails d'une structure articulée utilisant ce deuxième module 22 sont montrés sur les figures 7, 8 et 9. Pour la simplicité, on supposera que ces figures montrent le module 21 auquel est associé le module 22. Autrement dit, il s'agit de la même structure que celle illustrée par les figure 4 à 6 dans lesquelles le tourillon 38 est le tourillon du module 22. En conséquence, on n'expliquera plus en détail ce module 21, notamment le bloc cylindrique 24 avec les différentes gorges annulaires et canaux intérieurs.

Comme le montrent les figures, le module 22 est traversé par des canaux intérieurs 56a, 56b, 56c, 56d et 56e reliant chacune des rainures 38a, 38b, 38c, 38d et 38e à la surface de la tête de distribution 56. Celle-ci est, de préférence, conçue de forme cubique et les canaux intérieurs sont dégagés partiellement sur l'une des faces et partiellement sur la face opposée. Deux raccords 60, 62 sont conçus pour être fixés sur ces deux faces opposées de la tête de distribution 56. La référence 61 indique des taraudages destinés à recevoir les vis de fixation de ces raccords 60 et 62. Ces raccords 60 et 62 établissent respectivement les communications avec des conduites extérieures 58b, 58c et 58e, d'une part et 58a et 58d, d'autre part.

En considérant la structure globale illustrée par les figures 4 à 9, on voit que cette structure formée par l'association des modules 21 et 22, le bloc de connexion 32 et les raccords 60 et 62 établit une communication entre les conduites rigides 36a, 36b, 36c, 36d, 36e, d'une part et les conduites 58a, 58b, 58c, 58d, 58e, d'autre part, la circulation pouvant se faire dans un sens ou dans l'autre.

Il est à noter que les canaux intérieurs des deux modules 21 et 22 s'étendent toujours en ligne droite, de sorte qu'ils peuvent être réalisés par forage dans des blocs coulés ou usinés.

Il est également à noter que les rainures du tourillon 38 et les gorges du bloc 24 peuvent être inversées si les besoins existent, c'est-à-dire que les gorges peuvent être prévues sur le tourillon et les rainures de faible profondeur peuvent être prévues dans le bloc 24. Pour effectuer cette inversion, il faut bien entendu que le diamètre du tourillon 38 soit suffisant pour pouvoir y aménager les gorges et les canaux intérieurs.

Le troisième module 23 est illustré sur la figure 3. Ce module est composé d'un bloc cylindrique 24 analogue au bloc 24 du module 21. Ce bloc 24 comporte également un alésage 28 pour recevoir un tourillon 38. A ce bloc 24 est associé un tourillon 38 de façon que l'axe longitudinal de ce tourillon 38 soit perpendiculaire à l'axe de l'alésage 28. Chacune des rainures du tourillon 38 communique à travers les canaux intérieurs de ce tourillon et à travers les canaux du bloc 24 avec chacune des gorges circulaires de celui-ci. Ce module 23 peut être associé avec un ou plusieurs des modules 21 ou 22, ainsi qu'avec d'autres modules identiques 23.

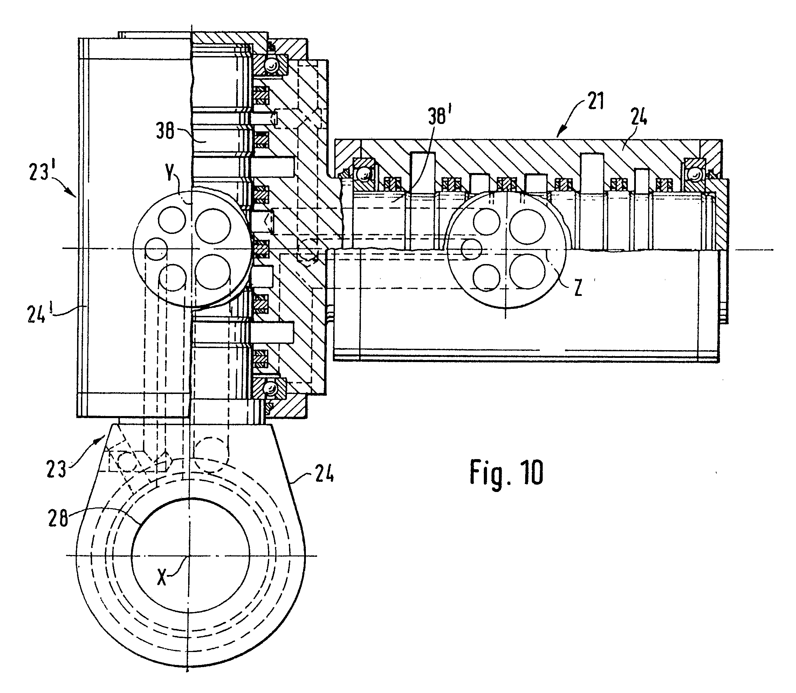

La figure 10 montre une combinaison obtenue par l'association des deux modules identiques 23 et 23' et d'un module 21. Comme le montre cette figure, le tourillon 38 du module 23 est logé dans le bloc 24' d'un module 23' alors que le tourillon 38' de ce dernier est logé dans le bloc 24 d'un module 21. Les différentes gorges circulaires et rainures, ainsi que les canaux intérieurs des blocs et des tourillons sont les mêmes que ceux décrits précédemment en référence aux figures précédentes et ne seront plus décrits en détail.

La combinaison montrée sur la figure 10 peut donc assurer le raccord des conduites pénétrant dans le module 21 à travers un bloc de connexion non montré mais analogue au bloc 32 de la figure 4, et un tourillon de distribution ou de réception non montré sur lequel est engagé le bloc 24 par son alésage 28. La combinaison de la figure 10 constitue en même temps une articulation universelle étant donné qu'il y a trois axes de pivotement. En effet, le bloc 24 du module 23 peut pivoter autour de l'axe X, le bloc 24' du module 23' peut pivoter autour de l'axe Y, alors que les modules 23 et 23' peuvent pivoter par rapport au module 21 autour de l'axe Z et vice-versa, les axes X, Y, Z étant perpendiculaires l'un à l'autre.

Il est à noter que tous les éléments montrés sur les figures sont interchangeables et peu encombrants. Notamment, les éléments de finition tels que les roulements 40, 42, le couvercle 44 et les bagues de fermeture 46 et 48 montrés sur la figure 4 sont identiques aux éléments correspondants de la figure 10, c'est-à-dire qu'ils peuvent être utilisés avec n'importe lequel des trois modules montrés sur les figures 1 à 3.

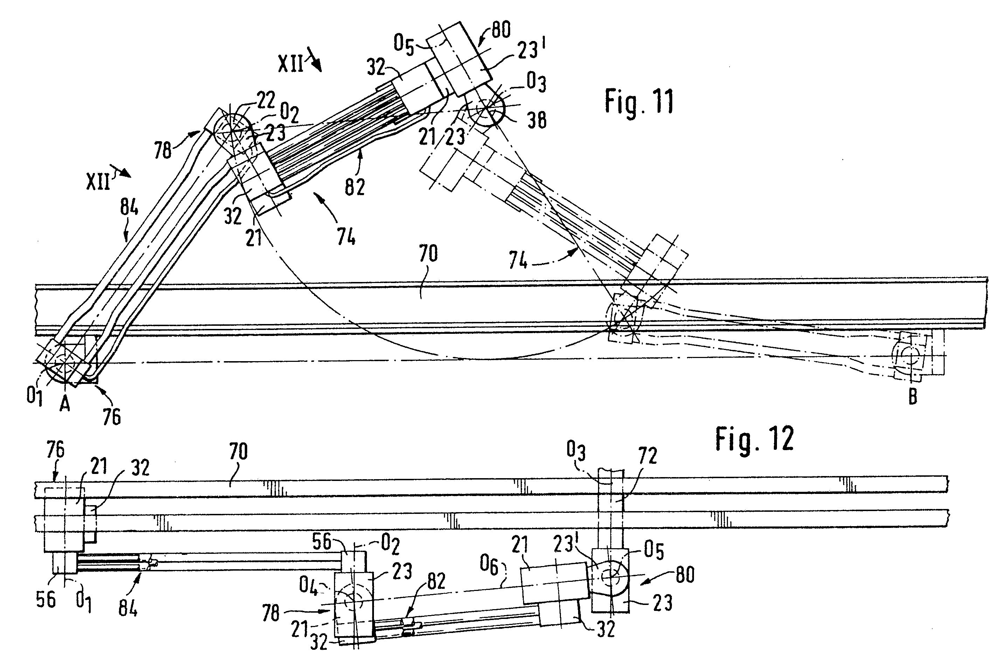

Les figures 11 et 12 montrent l'application particulière d'un système modulaire à l'alimentation d'une foreuse de trous de coulée en fluides hydraulique et pneumatique. Il est à noter que la figure 12 représente une vue en plan suivant les flèches XII-XII de la figure 11.

Sur ces figures, on voit un affût, désigné par 70, sur lequel coulisse un organe de forage, en l'occurence une foreuse à percussion non représentée. Cette foreuse est conçue pour voyager entre une position de retrait représentée par A et une position de travail indiquée par B. Les circuits hydraulique et pneumatique aboutissent en un point fixe prédéterminé, par exemple en 72. Un bras de liaison coudé désigné globalement par 74 assurant la connexion entre le point 72 d'arrivée des circuits et la foreuse se balade le long de l'affût 70 entre les positions A et B. Le bras 74 est donc amené à occuper alternativement les deux positions extrêmes représentées en traits pleins et en traits mixtes, ainsi que toutes les positions intermédiaires.

En théorie, les trois axes de pivotement représentés par $0_1$, $0_2$ et $0_3$ suffiraient au bras coudé 74 pour pouvoir occuper toutes ces positions. Malheureusement, comme mentionné ci-dessus, un défaut de parallélisme de ces axes, si petit soit-il, provoque des sollicitations excessives dans les articulations, une surcharge des éléments de liaison (conduites) et des roulements et, par conséquent, une destruction des articulations qui fait naître rapidement des fuites au niveau des raccords tournants assurant le pivotement autour de ces axes. Par contre, le système modulaire proposé par la présente invention permet une adaptation du bras coudé 74 à toutes les imprécisions de fabrication et aux déformations ultérieures grâce à trois axes de pivotement supplémentaires. Cette conception élimine par conséquent toutes les sollicitations au niveau des raccords tournants, c'est-à-dire réduit considérablement les risques de destructions et de fuites, et allonge la viabilité du dispositif d'alimentation.

A cet effet, le bras articulé 74 est relié à la foreuse non montrée par un pivot, appelé pivot baladeur 76, assurant un pivotement simple autour de l'axe $0_1$. Ce pivot 76 correspond exactement à la structure articulée composée sur base des modules 21 et 22 et illustrée en détail en référence aux figures 4 à 9. Autrement dit, un groupe 84 de conduites rigides comprenant quatre conduites hydrauliques et une conduite pneumatique débouche dans la tête de distribution 56 d'un module 22 dont le tourillon 38 tourne dans un module 21 pourvu d'un bloc de connexion 32 à travers lequel les circuits hydraulique et pneumatique alimentent la foreuse non montrée.

Le coude 78 est constitué par une structure articulée composée, dans le sens de circulation, des trois modules 21, 23 et 22. Un groupe 82 de conduites rigides débouche dans un bloc de connexion 32 d'un module 21. Ce module 21 est associé avec un module 23 identique à celui de la figure 3. Ce module 23 est, à son tour, associé avec un module 22 relié au groupe de conduites 84 à travers sa tête de distribution 56. Outre le pivotement autour de l'axe $0_2$, ce coude articulé 78 permet, par conséquent, un pivotement autour d'un axe $0_4$ confondu avec l'axe longitudinal du tourillon 38 du module 23 et de l'axe de l'alésage du module 21.

La référence 80 représente un système de pivotement composé à trois axes de pivotement orthogonaux. Ce système de pivotement 80 est constitué par la structure illustrée sur la figure 10. L'admission des circuits hydraulique et pneumatique est effectuée à travers un pivot fixe 72, conçu en forme de tourillon 38. Sur ce tourillon 38 de l'admission 72 est engagé un premier module 23 sur le tourillon duquel est engagé un second module 23'. Le tourillon de ce second module 23' pénètre, à son tour, dans un module 21 relié au groupe 82 de conduites à travers son bloc de connexion 32. Le système de pivotement 80 permet, par conséquent, outre le pivotement autour de l'axe $0_3$ des pivotements supplémentaires autour des axes orthogonaux $0_5$ et $0_6$.

Il est à noter que les deux groupes 84 et 82 de conduites rigides ne sont, de préférence, pas constituées par des sections droites de conduites, à l'exemple de ce qui est représenté pour le groupe 84. Cette conception permet aux conduites de subir une légère dilatation thermique sans que cette dilatation n'ait de conséquence néfaste pour les raccords avec les blocs de connexion 32 et les têtes de distribution 56.

Le dispositif d'alimentation de la perceuse en fluides hydraulique et pneumatique comporte selon la présente invention six axes de pivotement qui se répartissent suivant le sens de circulation du fluide, de la manière suivante: trois axes en 80, deux axes en 78 et un axe en 76, c'est-à-dire une combinaison 3-2-1. Il est à noter qu'avec le système modulaire proposé, on peut prévoir d'autres combinaisons des axes de pivotement à condition que, dans l'exemple illustré, le total des axes de pivotement soit égal à six et qu'il n'y ait pas plus de trois axes réunis. Outre la combinaison ci-dessus (3-2-1), on peut donc prévoir, dans le sens de circulation du fluide, les combinaisons suivantes:

2-3-1
2-1-3
1-2-3
3-1-2
1-3-2 et
2-2-2.

Il est toutefois préférable de prévoir l'articulation avec un seul axe de pivotement au niveau de la perceuse car c'est cette articulation qui est la plus exposée aux vibrations du percuteur et à la chaleur ambiante.

## Revendications

1. Système d'éléments modulaires pour la réalisation de connexions pivotantes et étanches traversées par plusieurs passages entre deux groupes de conduits rigides pour fluides hydrauliques sous pression, comprenant au moins un premier module (21) constitué d'un bloc cylindrique annulaire (24) dont l'alésage cylindrique axial (28) présente une série de gorges circulaires intérieures (28a, 28b, 28c, 28d, 28e), chacune de ces gorges étant respectivement en communication avec un canal (24a, 24b, 24c, 24d, 24e) traversant le bloc (24) et débouchant à l'extérieur de celui-ci, et une série de bourrages annulaires (30) prévus de part et d'autre de chacune desdites gorges (28a, 28b, 28c, 28d, 28e) et comprenant également un second module constitué d'un tourillon cylindrique (38) dont le diamètre extérieur correspond au diamètre intérieur de l'alésage (28) du premier module afin que ce tourillon (38) puisse être associé par pénétration et de manière étanche, audit premier module et qui est traversé axialement par une série de canaux (56a, 56b, 56c, 56d, 56e) dont le nombre correspond à celui desdites gorges circulaires (28a, 28b, 28c, 28d, 28e), chacun de ces canaux (56a, 56b, 56c, 56d, 56e) étant relié radialement à la surface extérieure du tourillon (38) à un endroit tel qu'il débouche dans l'une des gorges circulaires (28a, 28b, 28c, 28d, 28e) dudit premier module lorsque les deux éléments sont associés l'un à l'autre, caractérisé en ce que ledit bloc cylindrique (24) du premier module (21) est pourvu d'une face extérieure plate (26) parallèle à l'axe de l'alésage (28), d'une série d'ouvertures (26a, 26b, 26c, 26d, 26e) dans ladite face (26) respectivement en communication avec chacune des gorges (28a, 28b, 28c, 28d, 28e) à travers les canaux intérieurs (24a, 24b, 24c, 24d, 24e) ces ouvertures (26a, 26b, 26c, 26d, 26e) étant disposées symétriquement autour du centre de la face plate, en ce que ledit tourillon (38) du second module (22) est rendu solidaire d'une tête de distribution (56) traversée par des canaux intérieurs (56a, 56b, 56c, 56d, 56e), en ce qu'il est prévu un troisième module (23) constitué par un tourillon analogue au tourillon (38) du second module (22) solidaire avec la face extérieure d'un bloc cylindrique analogue au bloc cylindrique (24) du premier module (21) de manière que les axes du tourillon (38) et du bloc (24) soient perpendiculaires l'un à l'autre et que chacun des canaux intérieurs de l'un des modules communique avec le canal correspondant de l'autre module et en ce que ces trois modules (22) (23) (24) peuvent être combinés de façon arbitraire et en nombre indéterminé en une structure articulée.

2. Système selon la revendication 1, caractérisé en ce que les rainures (38a, 38b, 38c, 38d, 38e) du tourillon (38) ont toutes la même profondeur.

3. Système selon la revendication 1, caractérisé en ce que les gorges circulaires (28a, 28b, 28c, 28d, 28e) du bloc (24) ont une profondeur variable en fonction du débit du fluide destiné à passer à travers ces gorges.

4. Système selon l'une quelconque des revendications 2 ou 3, caractérisé en ce que les rainures (38a, 38b, 38c, 38d, 38e) du tourillon (38) ont des bords obliques.

5. Système selon l'une quelconque des revendications 1 à 4, caractérisé par une série de taraudages (33) prévus symétriquement autour du centre de ladite face (26) et servant à la fixation, sur celle-ci, d'un bloc de connexion (32) établissant une communication avec chacun desdits canaux intérieurs (24a, 24b, 24c, 24d, 24e).

6. Système selon l'une quelconque des revendications 1 à 4, caractérisé en ce que la tête de distribution (56) est pourvue d'au moins une face de fixation d'un raccord établissant une communication avec chacun des canaux intérieurs (56a, 56b, 56c, 56d, 56e) du tourillon (38).

7. Système selon la revendication 6, caractérisé en ce que la tête de distribution (56) a une forme cubique, les canaux intérieurs (56a, 56b, 56c, 56d, 56e) débouchant sur deux faces opposées de la tête de distribution (56) tandis qu'il est prévu deux raccords (60, 62) conçus pour être fixés sur ces faces et établir la communication avec des conduites rigides extérieures.

8. Système selon la revendication 1, caractérisé en ce que la structure articulée comporte une paire de roulements (40, 42) identiques, interchangeables et associables avec chacun des modules (21, 22, 23), et montés respectivement avant le premier et après le dernier bourrage pour assurer et maintenir l'assemblage rotatif entre le tourillon (38) et le bloc cylindrique (24).

9. Système selon la revendication 1, caractérisé en ce que la structure articulée comporte également un couvercle circulaire (44) conçu pour être fixé, de façon démontable, sur l'extrémité frontale du tourillon (38) opposée à celle par laquelle pénètrent les canaux (56a, 56b, 56c, 56d, 56e) dans le tourillon et prendre appui sur une bague intérieure du roulement qui s'y trouve.

10. Système selon la revendication 1, caractérisé en ce que la structure articulée comporte une paire de bagues de fermeture (46, 48) identiques, interchangeables et associables avec chacun des modules (21, 22, 23) et fixées, de façon démontable, et par l'entremise d'un joint d'étanchéité (50, 54) sur chacune des extrémités du bloc cylindrique (24) autour du tourillon associé (38).

11. Système selon l'une quelconque des revendications 1 à 10, caractérisé par un écartement constant »a« entre toutes les gorges circulaires, toutes les rainures et tous les canaux intérieurs du bloc (24) du tourillon (38) du bloc de connexion (32) et de la tête de distribution (56).

12. Bras articulé composé d'un groupe de conduites rigides séparées dans chacune desquelles circule un fluide sous pression, reliant un pivot fixe à un pivot baladeur et pourvu d'au moins un coude entre ces deux points, caractérisé en ce que les pivots et coudes sont réalisés par des systèmes d'éléments modulaires selon l'une quelconque des revendications précédentes 1 à 11, et en ce que le nombre d'axes de pivotement est supérieur au nombre desdits pivots et coudes.

13. Dispositif d'alimentation d'une perceuse de trous de coulée d'un four à cuve en fluide hydraulique ou pneumatique, ladite perceuse étant conçue pour coulisser le long d'un affût, tandis que le fluide est disponible en un point prédéterminé et fixe par rapport à l'affût, le dispositif comprenant un raccordement à tuyau rigide entre ce point et la perceuse, caractérisé en ce que le raccordement est constitué par un bras articulé (74) selon la revendication 12.

14. Dispositif selon la revendication 13, caractérisé en ce qu'il comprend, à l'une de ses extrémités, un pivot (76) à un axe de pivotement ($0_1$), à l'extrémité opposée un système de pivotement composé (80) à trois axes de pivotement ($0_3$, $0_5$, $0_6$) orthogonaux entre eux et, dans le région centrale, un coude articulé (78) à deux axes de pivotement perpendiculaires ($0_2$, $0_4$).

15. Dispositif selon la revendication 14, caractérisé en ce que le pivot (76) est composé par l'association des premier et second modules (21, 22), tandis que le système de pivotement (80) est réalisé par l'association du premier module (21) et de deux modules du troisième type (23), alors que le coude articulé (78) est réalisé par l'association de chacun des trois modules (21, 22, 23).

16. Dispositif selon l'une quelconque des revendications 13 à 15, caractérisé en ce que les conduites rigides reliant le système de pivotement (80) au coude (78) ainsi que celles reliant le coude (78) au pivot (76) comporte des coudes pour permettre des dilatations thermiques.

## Patentansprüche

1. System aus Modulteilen für dichte Drehverbindungen, welche von mehreren Durchlässen zwischen zwei Gruppen von starren Leitungen für hydraulische Druckflüssigkeiten durchquert werden, mindestens umfassend einen ersten Modul (21), bestehend aus einem ringförmigen, zylindrischen Block (24), dessen zylindrische axiale Bohrung (28) eine Anzahl von inneren, kreisförmigen Ringnuten (28a, 28b, 28c, 28d, 28e) aufweist, wovon jede jeweils mit einem den Block (24) durchquerenden Kanal (24a, 24b, 24c, 24d, 24e) in Verbindung steht, welcher außen am Block (24) ausmündet, sowie eine Anzahl von ringförmigen Dichtungen (30) beidseits der genannten Ringnuten (28a, 28b, 28c, 28d, 28e), ebenfalls umfassend einen zweiten Modul, bestehend aus einem zylindrischen Drehzapfen (38), dessen Außendurchmesser dem Innendurchmesser der Bohrung (28) des ersten Moduls entspricht, damit dieser Drehzapfen (38) durch Hineinschieben und auf dichte Weise dem genannten ersten Modul zugeordnet werden kann, und welcher axial von einer Anzahl von Kanälen (56a, 56b, 56c, 56d, 56e) durchquert wird, deren Zahl derjenigen der genannten Ringnuten (28a, 28b, 28c, 28d, 28e) entspricht, wobei jeder dieser Kanäle (56a, 56b, 56c, 56d, 56e) radial mit der Außenfläche des Drehzapfens (38) an einer solchen Stelle in Verbindung steht, daß er in eine der Ringnuten (28a, 28b, 28c, 28d, 28e) des genannten ersten Moduls einmündet, wenn die beiden Elemente miteinander verbunden werden, dadurch gekennzeichnet, daß der genannte zylindrische Block (24) des ersten Moduls (21) mit einer äußeren, zur Achse der Bohrung (28) parallelen Abflachung (26) versehen ist, durch eine Anzahl von Öffnungen (26a, 26b, 26c, 26d, 26e) in der genannten Abflachung (26), welche jeweils mit einer der Ringnuten (28a, 28b, 28c, 28d, 28e) durch die inneren Kanäle (24a, 24b, 24c, 24d, 24e) in Verbindung stehen, wobei diese Öffnungen (26a, 26b, 26c, 26d, 26e) symmetrisch um den Mittelpunkt der Abflachung angeordnet sind, daß der genannte Drehzapfen (38) des zweiten Moduls (22) mit einem von inneren Kanälen (56a, 56b, 56c, 56d, 56e) durchquerten Verteilerkopf (56) einstückig gemacht wird, daß ein dritter Modul (23) vorgesehen ist, bestehend aus einem dem Drehzapfen (38) des zweiten Moduls (22) analogen Drehzapfen, welcher mit der Außenfläche eines zylindrischen Blocks analog dem zylindrischen Block (24) des ersten Moduls einstückig ist, so, daß die Achsen des Drehzapfens (38) und des Blocks (24) senkrecht zueinander sind und daß jeder der inneren Kanäle des einen Moduls mit dem entsprechenden Kanal des anderen Moduls in Verbindung steht, und daß diese drei Moduln (22, 23, 24) in beliebiger Weise und in unbeschränkter Zahl zu einer Gelenkstruktur kombiniert werden können.

2. System nach Anspruch 1, dadurch gekennzeichnet, daß die Rillen (38a, 38b, 38c, 38d, 38e) des Drehzapfens (38) alle die gleiche Tiefe aufweisen.

3. System nach Anspruch 1, dadurch gekennzeichnet, daß die Ringnuten (28a, 28b, 28c, 28d, 28e) des Blocks (24) eine unterschiedliche Tiefe haben in Funktion des Fluiddurchlasses, welcher durch diese Ringnuten durchtreten soll.

4. System nach den Ansprüchen 2 und 3, dadurch gekennzeichnet, daß die Rillen (38a, 38b, 38c, 38d, 38e) des Drehzapfens (38) schräge Ränder haben.

5. System nach den Ansprüchen 1 bis 4, gekennzeichnet durch eine Anzahl von Muttergewinden (33), welche symmetrisch um den Mittelpunkt der genannten Abflachung (26) vorgesehen sind und zur Befestigung, auf dieser letzteren, eines Verbindungsblocks (32) dienen, welcher eine Verbindung mit jedem der genannten inneren Kanäle (24a, 24b, 24c, 24d, 24e) herstellt.

6. System nach den Ansprüchen 1 bis 4, dadurch gekennzeichnet, daß der Verteilerkopf (56) mindestens eine Befestigungsfläche für ein Anschlußstück aufweist, welches eine Verbindung mit jedem der inneren Kanäle (56a, 56b, 56c, 56d, 56e) des Drehzapfens (38) herstellt.

7. System nach Anspruch 6, dadurch gekennzeichnet, daß der Verteilerkopf (56) würfelförmig ist, wobei die inneren Kanäle (56a, 56b, 56c, 56d, 56e) an zwei gegenüberliegenden Seiten des Verteilerkopfes (56) ausmünden, während zwei Anschlußstücke (60, 62) vorgesehen sind, dazu ausgelegt, um an diesen Seiten befestigt zu werden und die Verbindung mit den äußeren starren Leitungen herzustellen.

8. System nach Anspruch 1, dadurch gekennzeichnet, daß die Gelenkstruktur zwei identische Wälzlager (40, 42) umfaßt, welche unter sich vertauschbar sind und jedem der Moduln (21, 22, 23) zugeordnet werden können, und welche vor der ersten, bzw. hinter der letzten Dichtung montiert sind, um die drehbare Verbindung zwischen dem Drehzapfen (38) und dem zylindrischen Block (24) zu ermöglichen und zu halten.

9. System nach Anspruch 1, dadurch gekennzeichnet, daß die Gelenkstruktur ebenfalls einen runden Deckel (44) aufweist, dazu ausgelegt, um demontierbar an derjenigen Stirnfläche des Drehzapfens (38) befestigt werden zu können, welche derjenigen gegenüber liegt, durch welche die Kanäle (56a, 56b, 56c, 56d, 56e) in den Drehzapfen hineintreten, und sich auf dem Innenring des sich dort befindlichen Lagers abzustützen.

10. System nach Anspruch 1, dadurch gekennzeichnet, daß die Gelenkstruktur zwei identische Abschlußringe (46, 48) aufweist, welche unter sich austauschbar sind und jedem der Moduln (21, 22, 23) zugeordnet werden können und demontierbar, unter Zwischenschaltung einer Dichtung (50, 54), an jeder der Extremitäten des zylindrischen Blocks (24) um den zugeordneten Drehzapfen (38) herum befestigt sind.

11. System nach den Ansprüchen 1 bis 10, gekennzeichnet durch einen konstanten Abstand »a« zwischen sämtlichen Ringnuten, sämtlichen Rillen und sämtlichen inneren Kanälen des Blocks (24), des Drehzapfens (38), des Anschlußblocks (32) und des Verteilerkopfes (56).

12. Gelenkarm, welcher aus einem Satz von getrennten, starren Leitungen für die Zirkulation eines Druckfluids besteht und ein ortsfestes Gelenk mit einem mobilen Gelenk verbindet, und welcher mindestens ein Knie zwischen diesen beiden Punkten aufweist, dadurch gekennzeichnet, daß die Gelenke und Knie aus Systemen von Modulteilen gemäß den Ansprüchen 1 bis 11 bestehen, und daß die Zahl der Drehachsen größer ist als die Zahl der genannten Gelenke und Knie.

13. Vorrichtung zur Versorgung einer Stichlochbohrmaschine eines Schachtofens mit einem hydraulischen oder pneumatischen Fluid, wobei die genannte Bohrmaschine entsprechend ausgelegt ist, um entlang einer Lafette verschoben werden zu können, während das Fluid an einem bestimmten und ortsfesten Punkt in bezug zur Lafette zur Verfügung steht, und die Vorrichtung eine Verbindung aus starren Rohren zwischen diesem Punkt und der Bohrmaschine umfaßt, dadurch gekennzeichnet, daß die Verbindung aus einem Gelenkarm (74) nach Anspruch 12 besteht.

14. Vorrichtung nach Anspruch 13, dadurch gekennzeichnet, daß sie, an einer ihrer Extremitäten, ein Gelenk (76) mit einer Drehachse $(0_1)$ umfaßt, an der entgegengesetzten Extremität ein zusammengesetztes Gelenksystem (80) mit drei zueinander senkrechten Drehachsen $(0_3, 0_5, 0_6)$ und, im zentralen Bereich, ein Gelenkknie (78) mit zwei zueinander senkrechten Drehachsen $(0_2, 0_4)$.

15. Vorrichtung nach Anspruch 14, dadurch gekennzeichnet, daß das Gelenk (76) aus der Kombination eines ersten mit einem zweiten Modul (21, 22) besteht, während das Gelenksystem (80) durch die Kombination des ersten Moduls (21) mit zwei Moduln des dritten Typs (23) verwirklicht ist, während das Gelenkknie (78) durch die Kombination je eines der drei Modulen (21, 22, 23) verwirklicht wird.

16. Vorrichtung nach den Ansprüchen 13 bis 15, dadurch gekennzeichnet, daß die starren, das Gelenksystem (80) mit dem Knie (78) verbindenden Leitungen, sowie diejenigen, welche das Knie (78) mit dem Gelenk (76) verbinden Krümmer, aufweisen zur Ermöglichung von thermischen Dehnungen.

## Claims

1. System of modular elements for the provision of tight pivotal connections traversed by a number of passages between two sets of rigid pipes for hydraulic fluids under pressure, comprising at least a first module (21) consisting of an annular cylindrical block (24) of which the axial cylindrical boring (28) has a series of internal circular grooves (28a, 28b, 28c, 28d, 28e), communicating with channels (24a, 24b, 24c, 24d, 24e), respectively, which pass through the block (24) and terminate on its exterior, and a set of annular packings (30) provided on each side of each of the said grooves (28a, 28b, 28c, 28d, 28e), and also comprising a second module consisting of a cylindrical journal (38) of which the external diameter corresponds to the internal diameter of the boring (28) of the first module, so that the said journal (38) can be tightly inserted into the aforementioned first module, and which is traversed axially by a series of channels (56a, 56b, 56c, 56d, 56e), corresponding in number to the said circular grooves (28a, 28b, 28c, 28d, 28e), each of the said channels (56a, 56b, 56c, 56d, 56e), being connected radially to the outer surface of the journal (38) in such a position that it leads into one of the circular grooves (28a, 28b, 28c, 28d, 28e), of the said first module when the two elements are connected to each other, characterized by the fact that the said cylindrical block (24) of the first module (21) is provided with a flat external surface (26) parallel to the axis of the boring (28), with a set of apertures (26a, 26b, 26c, 26d, 26e), respectively, via the internal channels (24a, 24b, 24c, 24d, 24e), respectively, the said apertures (26a, 26b, 26c, 26d, 26e), being arranged symmetrically around the centre of the flat surface, that the said journal (38) of the second module (22) is made integral with a distribution head (56) traversed by internal channels (56a, 56b, 56c, 56d, 56e), that a third module is provided which consists of a journal analogous to the journal (38) of the second module and integral with the external surface of a cylindrical block analogous to the cylindrical block (24) of the first module (21), in such a way that the axis of the journal (38) and that of the block (24) are perpendicular to each other and each of the internal channels of one of the modules is in communication with the corresponding channel of the other module and that the said three modules (22, 23, 24), can be combined in any manner and in any number desired to form an articulated structure.

2. System in accordance with claim 1, characterized by the fact that the slots (38a, 38b, 38c, 38d, 38e), of the journal (38) are all of equal depth.

3. System in accordance with claim 1, characterized by the fact that the circular grooves (28a, 28b, 28c, 28d, 28e), of the blocks (24) vary in depth according to the rate of flow of the liquid required to pass through them.

4. System in accordance with either of claims 2, 3, characterized by the fact that the slots (38a, 38b, 38c, 38d, 38e), of the journal (38) have slanting edges.

5. System in accordance with any one of the claims 1—4, characterized by a set of borings (33) provided symmetrically around the centre of the said surface (26) and serving to enable a connecting block (32) to be affixed to the latter, thus providing a means of communication with each of the said internal channels (24a, 24b, 24c, 24d, 24e).

6. System in accordance with any one of the claims 1—4, characterized by the fact that the distribution head (56) is provided with at least one fixing surface for a connection providing a means of communication with each of the internal channels (56a, 56b, 56c, 56d, 56e), of the journal (38).

7. System in accordance with claim 6, characterized by the fact that the distribution head (56) is cubical, the internal channels (56a, 56b, 56c, 56d, 56e), terminating on two opposite surfaces of the distribution head (56), while two connections (60, 62), are provided, designed to be affixed to the said surfaces and form the means of communication with rigid external pipes.

8. System in accordance with claim 1, characterized by the fact that the articulated structure comprises a pair of identical and interchangeable bearings (40, 42), which can be associated with each of the modules (21, 22, 23), and which are mounted before the first packing and after the last packing respectively, in order to provide and maintain the rotary assembly between the journal (38) and the cylindrical block (24).

9. System in accordance with claim 1, characterized by the fact that the articulated structure also comprises a circular cover (44) designed to be detachably affixed to that front end of the journal (38) which is opposite to the end through which the channels (56a, 56b, 56c, 56d, 56e), penetrate the journal and to rest against an inner ring of the bearing present therein.

10. System in accordance with claim 1, characterized by the fact that the articulated structure comprises an identical pair of interchangeable closing collars which can be associated with each of the modules (21, 22, 23), and detachably affixed via a tight joint (50, 54), to each of the ends of the cylindrical block (24) around the corresponding journal (38).

11. System in accordance with any one of claims 1—10, characterized by a constant distance »a« between all the circular grooves, all the slots and all the internal channels of the block (24) of the journal (38) of the connect on block (32) and of the distribution head (56).

12. Articulated arm consisting of a set of separate rigid pipes each carrying a fluid under pressure, the said arm connecting a fixed pivot to a sliding pivot and being provided with at least one bend between these two points, characterized by the fact that the pivots and bends are provided by systems of modular elements in accordance with any one of the preceding claims 1—11 and that the number of pivoting axes is greater than the number of the said pivots and bends.

13. Device for feeding hydraulic or pneumatic fluid to a shaft furnace tap hole drilling machine, the said drilling machine being designed to slide along a bar, while the fluid is available at a predetermined point which is fixed in relation to the bar, the device comprising a rigid pipe connection between the said point and the drilling machine, characterized by the fact that the connection is formed by an articulated arm (74) according to claim 12.

14. Device in accordance with claim 13, characterized by the fact that it is provided at one of its ends with a pivot (76) having one pivoting axis ($0_1$) and at the opposite end with a compound pivotal system (80) with three pivoting axes ($0_3$, $0_5$, $0_6$), orthogonal to one another, and in the central zone with an articulated bend (78) with two perpendicular pivoting axes ($0_2$, $0_4$).

15. Device in accordance with claim 14, characterized by the fact that the pivot (76) is formed by the first and second modules (21, 22) associated with each other, while the pivotal system (80) is formed by the association of the first module (21) with two modules of the third type (23), the articulated bend (78) being formed by the three modules (21, 22, 23), associated with one another.

16. Device in accordance with any one of claims 13—15, characterized by the fact that the rigid pipes connecting the pivotal system (80) to the bend and also those connecting the bend (78) to the pivot (76) comprise bends designed to allow for heat expansion.

Fig . 2

38

22

56

Fig. 3

23

38

24

28

21

33  26b  26e  26a
26
26d
26c

28

24

Fig . 1

Fig. 5

Fig. 4

Fig. 6

Fig. 7

Fig. 8

Fig. 9

Fig. 10

Fig. 11

Fig. 12